# EUROPÄISCHE PATENTSCHRIFT

(11) **EP 2 632 721 B1**
(45) Veröffentlichungstag und Bekanntmachung des Hinweises auf die Patenterteilung: **02.07.2014**
(21) Anmeldenummer: 11770810.7
(22) Anmeldetag: 20.10.2011
(51) Int. Cl.: B32B 17/10, B32B 27/08, B32B 27/18, B32B 27/30, B32B 27/36

(54) **KUNSTSTOFF-MEHRSCHICHTAUFBAU MIT NIEDRIGER ENERGIETRANSMISSION**
MULTILAYER PLASTIC STRUCTURE HAVING LOW ENERGY TRANSMISSION
STRUCTURE MULTICOUCHE EN MATIÈRE PLASTIQUE À FAIBLE TRANSMISSION D'ÉNERGIE

(30) Priorität: 25.10.2010 EP 10188778
(43) Veröffentlichungstag der Anmeldung: 04.09.2013
(73) Patentinhaber: Bayer Intellectual Property GmbH, 40789 Monheim am Rhein (DE)
(72) Erfinder: PUDLEINER, Heinz, 47800 Krefeld (DE); KUHLMANN, Timo, 42799 Leichlingen (DE); MEYER, Alexander, 40489 Düsseldorf (DE)
(74) Vertreter: BIP Patents
(86) Internationale Anmeldenummer: PCT/EP2011/068342
(87) Internationale Veröffentlichungsnummer: WO 2012/055757

(56) Entgegenhaltungen:
- WO-A1-2004/000549
- US-A1- 2006 154 049
- US-A1- 2008 075 948
- US-A1- 2008 292 820

## Beschreibung

Die Erfindung betrifft einen Mehrschichtaufbau enthaltend eine Basisschicht enthaltend wenigstens einem transparenten thermoplastischen Kunststoff und einen speziellen anorganischen Infrarotabsorber sowie eine IR-reflektierende Multilagenschicht, die Herstellung eines solchen Mehrschichtaufbaus und deren Verwendung zur Herstellung von Kunststoff-Verscheibungen in Gebäuden, Automobilen, Schienen- und Luftfahrzeugen.

Verscheibungen aus Zusammensetzungen, enthaltend transparente thermoplastische Polymere wie z.B. Polycarbonat, bieten für den Fahrzeugbereich und für Gebäude viele Vorteile gegenüber herkömmlichen Verscheibungen aus Glas. Hierzu zählen z.B. erhöhte Bruchsicherheit oder Gewichtsersparnis, die im Fall von Automobilverscheibungen eine höhere Insassensicherheit bei Verkehrsunfällen und niedrigeren Kraftstoffverbrauch ermöglichen. Schließlich lassen transparente Werkstoffe, die transparente thermoplastische Polymere enthalten, aufgrund der einfacheren Formbarkeit eine wesentlich größere Designfreiheit zu.

Nachteilig ist allerdings, dass die hohe Wärmedurchlässigkeit (d.h. Durchlässigkeit für IR-Strahlung) von transparenten thermoplastischen Polymeren bei Sonneneinwirkung zu einer unerwünschten Erwärmung im Inneren von Fahrzeugen und Gebäuden führt. Die erhöhten Temperaturen im Innenraum vermindern den Komfort für die Insassen bzw. Bewohner und können erhöhte Anforderungen an die Klimatisierung nach sich ziehen, d i e w i e d e ru m d e n Energieverbrauch steigern und so die positiven Effekte wieder aufheben. Um dennoch der Forderung nach einem geringen Energieverbrauch verbunden mit einem hohen Insassen- bzw. Bewohnerkomfort Rechnung zu tragen, sind Scheiben erforderlich, die mit einem entsprechenden Wärmeschutz ausgerüstet sind.

Wie seit langem bekannt ist, entfällt der größte Teil der solaren Energie neben dem sichtbaren Bereich des Lichts zwischen 400 nm und 750 nm auf den Bereich des nahen Infrarots (NIR) zwischen 750 nm und 2500 nm. Eindringende Sonnenstrahlung wird z.B. im Inneren eines Automobils absorbiert und als langwellige Wärmestrahlung mit einer Wellenlänge von 5 µm bis 15 µm emittiert. Da in diesem Bereich übliche Verscheibungsmaterialien - insbesondere im sichtbaren Bereich transparente thermoplastische Polymere - nicht durchlässig sind, kann die Wärmestrahlung nicht nach außen abstrahlen. Man erhält einen Treibhauseffekt und der Innenraum heizt sich auf. Um diesen Effekt möglichst klein zu halten, sollte daher die Transmission der Verscheibungen im NIR möglichst minimiert werden. Übliche transparente thermoplastische Polymere wie z.B. Polycarbonat sind jedoch sowohl im sichtbaren Bereich, als auch im NIR transparent.

Es werden daher z.B. Zusätze benötigt, welche im NIR eine möglichst geringe Transparenz aufweisen ohne die Transparenz im sichtbaren Bereich des Spektrums nachteilig zu beeinflussen. Um den Kunststoffen Wärme-absorbierende Eigenschaften zu verleihen werden daher entsprechende Infrarotabsorber (IR-Absorber) als Additive eingesetzt. Insbesondere sind hierfür IR-Absorber-Systeme interessant, die über ein breites Absorptionsspektrum im NIR-Bereich bei gleichzeitig geringer Absorption im sichtbaren Bereich (geringe Eigenfarbe) verfügen. Die entsprechenden Kunststoff-Zusammensetzungen sollen darüber hinaus eine hohe Thermostabilität sowie eine ausgezeichnete Lichtstabilität aufweisen.

Es ist eine Vielzahl von IR-Absorbern auf Basis organischer oder anorganischer Materialien bekannt, die in transparenten Thermoplasten eingesetzt werden können. Eine Auswahl derartiger Materialien ist z.B. in J. Fabian, H. Nakazumi, H. Matsuoka, Chem. Rev. 92, 1197 (1992), in US-A 5,712,332 oder JP-A 06240146 beschrieben.

IR-absobierende Additive auf Basis organischer Materialien haben allerdings häufig den Nachteil, dass sie eine geringe Stabilität gegenüber thermischer Belastung oder Bestrahlung aufweisen. So sind viele dieser Additive nicht genügend wärmestabil, um in transparente Thermoplaste eingearbeitet zu werden, da bei der Verarbeitung der Kunststoffe Temperaturen bis zu 330°C erforderlich sind. Darüber hinaus sind die Verscheibungen im Gebrauch oft über längere Zeiträume Temperaturen von mehr als 50°C, bedingt durch die Sonneneinstrahlung, ausgesetzt, was zur Zersetzung oder zum Abbau der organischen Absorbentien führen kann. Ferner weisen die organischen IR-Absorber häufig keine genügend breite Absorptionsbande im NIR-Bereich auf, so dass ihr Einsatz als IR-Absorber in Verscheibungsmaterialien ineffizient ist. Zusätzlich tritt oft noch eine unerwünschte, starke Eigenfarbe dieser Systeme auf.

IR-absorbierende Additive auf Basis anorganischer Materialien sind im Vergleich zu organischen Additiven häufig deutlich stabiler. Auch ist der Einsatz dieser Systeme oft ökonomischer, da sie in den meisten Fällen ein deutlich günstigeres Preis/Leistungsverhältnis aufweisen. So haben Materialien auf Basis feinteiliger Boride, wie z.B. Lanthanhexaborid, sich als effiziente IR-Absorber erwiesen, da sie über eine breite Absorptionsbande verbunden mit einer hohen Thermostabilität verfügen. Derartige Boride auf Basis von La, Ce, Pr, Nd, Tb, Dy, Ho, Y, Sm, Eu, ER, Tm, Yb, Lu, Sr, Ti, Zr, Hf, V, Ta, Cr, Mo, W und Ca sind z.B. in DE-A 10 392 543 oder EP-A 1 559 743 beschrieben.

Ein Nachteil dieser Additive ist allerdings ihre signifikante Eigenfarbe. Die Borid-haltigen Additive verleihen dem transparenten Kunststoff nach Einarbeitung eine charakteristische grüne Färbung, die häufig unerwünscht ist, da sie den Spielraum für eine neutrale Farbgebung stark einschränkt.

Beispielsweise werden in DE-A 10 392 543, US-A 2004/0028920, EP-A 1 559 743, EP-A 1 865 027 und EP-A 2 009 057 Polymerzusammensetzungen auf Basis anorganischer Boridpartikel beschrieben. Diese Zusammensetzungen weisen jedoch die genannte unerwünschte, signifikante Eigenfarbe auf.

In EP-A 1 559 743 werden Polycarbonatzusammensetzungen enthaltend anorganische IR-Absorber auf Basis von Boriden in Kombination mit UV-Absorbern beschrieben. Diese Zusammensetzungen erfüllen jedoch nicht die hohen Anforderungen hinsichtlich einer geringen Energietransmission insbesondere einer geringen sekundären Energietransmission. Ferner weisen diese Zusammensetzungen eine signifikante Eigenfarbe auf.

Zur Kompensation dieser Eigenfarbe werden oft größere Mengen weiterer, bevorzugt komplementärer Farbmittel eingesetzt, was jedoch die optischen Eigenschaften der Zusammensetzung beeinträchtigt und zu einer deutlich verringerten Transmission im sichtbaren Bereich führt. Dies ist insbesondere bei Fahrzeugverscheibungen unerwünscht oder in speziellen Fällen, in denen die Sicht des Fahrers nicht beeinträchtigt werden darf, unzulässig.

Ferner sind IR-absorbierende Additive aus der Gruppe der Wolframverbindungen bekannt, die über eine im Vergleich zu den aus dem Stand der Technik bekannten anorganischen IR-Absorbem auf Borid-Basis geringere Eigenabsorption im sichtbaren Spektralbereich verfügen. Die Herstellung und der Einsatz dieser Stoffe in thermoplastischen Materialien beispielsweise in H. Takeda, K. Adachi, J. Am. Ceram. Soc. 90, 4059 - 4061, (2007), WO-A 2005/037932 und WO-A 2009/059901 beschrieben. Als nachteilig stellte sich jedoch die mangelnde Langzeitstabilität gegenüber thermischer Belastung heraus. Während die thermische Instabilität von Wolframoxiden an sich bekannt ist und beispielsweise in Romanyuk et al.; J. Phys. Chem. C 2008, 112, 11090 - 11092 beschrieben wurde, zeigte sich auch bei der Einarbeitung dieser Verbindungen in eine Polymermatrix, dass bei Thermolagerung bei erhöhter Temperatur der entsprechenden Polymer-Zusammensetzungen, wie z.B. bei einer Polycarbonat-Zusammensetzung, die Absorption im IR-Bereich signifikant nachlässt.

Für eine Anwendung im Glazing-Bereich, insbesondere für Autoverscheibungen, ist es jedoch unbedingt erforderlich, dass die entsprechenden IR-absorbierenden Kunststoff-Zusammensetzungen eine Langzeitstabilität gegen höhere Temperaturen, insbesondere solchen Temperaturen, die ein Artikel aus Kunststoff bei intensiver Sonneneinstrahlung annehmen kann (z.B. 50°C - 110°C), aufweisen. Ferner muss gewährleistet sein, dass sich die Zusammensetzung unter herkömmlichen Prozessbedingungen verarbeiten lassen, ohne dass schon hierdurch die IR-absorbierenden Eigenschaften vermindert werden.

Ein weiterer Nachteil von IR-absorberhaltigen Verscheibungen besteht in ihrer Wärmespeicherung. Eine IR-absorberhaltige Scheibe erwärmt sich bei Bestrahlung mit Sonnenlicht und die gespeicherte Wärme wird dabei nach teilweise wieder nach außen, teilweise aber auch in den Innenraum des Fahrzeugs oder des Gebäudes abgegeben. Dieser sekundäre Wärmetransfer in den Innenraum ist kritisch, weil dieser den Innenraum zusätzlich zur direkten Energietransmission aufheizt. Um auch den sekundären Wärmetransfer zu berücksichtigen wird häufig für die Leistungsfähigkeit eines Systems die sogenannte "Total solar energy transmitted to the inside of a glazing" nachfolgend auch als "Total Solar Transmittance" T_{TS} nach ISO 13837 angegeben. Angestrebt wird häufig ein System mit möglichst hoher Transmission (Ty) im sichtbaren Bereich mit geringer primärer und sekundärer Energietransmission (T_{TS}).

Zur Vermeidung der indirekten Aufheizung durch den sekundären Wärmetransfer sind Pigmente oder Beschichtungen bekannt, welche die Infrarotstrahlung reflektieren. Durch diese Reflexion heizt sich die Scheibe weniger auf und der sekundäre Wärmetransfer nach innen ist geringer. Solche Systeme weisen jedoch häufig eine für Scheiben zu geringe Transmission auf. Häufig sind diese Scheiben nur noch transluzent. Andere Nachteile können z.B. in der Abschirmung von Funkwellen liegen und somit die Funktion von Mobilfunk- und Navigationsgeräten beeinträchtigen.

Aus US 6,333,084 und US 5,589,280 sind z.B. Mehrschichtaufbauten bekannt, welche u.a. IR-reflektierende dünne Metallschichten enthalten. Diese Systeme behindern aber den Durchtritt von Funkwellen und stören somit u.a. Navigations- oder Mobilfunkgeräte. Ferner können dünne Metallschichten anfällig für Korrosion sein.

Die DE-A 10 117 786 beschreibt Mehrschichtaufbauten aus einer Basisschicht enthaltend organische IR-Absorber und einer IR-Reflexionsschicht. Schon allein die organischen IR-Absorber weisen aber die o.g. Stabilitätsprobleme auf.

Die US-A 2006/0251996 offenbart mehrschichtige Platten enthaltend eine Kernschicht enthaltend ein thermoplastisches Polymer und ein Metalloxid als IR absorbierendes Additiv. Auch diese Systeme erfüllen nicht die hohen Anforderungen hinsichtlich einer geringen Energietransmission insbesondere einer geringen sekundären Energietransmission.

Aus WO-A 99/36257 und US-A 2004/0032658 sind Multischicht-Systeme bekannt, welche IR-reflektierende Eigenschaften besitzen. Diese Systeme erfüllen jedoch nicht die hohen Anforderungen hinsichtlich einer äußerst geringen Energietransmission verbunden mit einer hohen visuellen Lichttransmission.

US 2008/0292820 A1 beschreibt eine Mehrschichtfolie, die Nanopartikel auf Basis von Metalloxiden wie Indium-Zinn-Oxid (ITO) und/oder Antimonoxid (ATO) sowie IR Absorbeern wie Lanthanhexaborid enthält. Der Mehrschichtaufbau hat allerdings aufgrund der geringen Dicke der IR-absorbierenden Schicht den Nachteil, dass es zu unterschiedlichen Farbtiefen in den Außen-bzw. Innenbereichen der Folie kommen kann.

US 2008/0075948 A1 beschreibt einen Mehrschichtaufbau bestehend unter anderem aus einer IR-reflektierenden Schicht und einer IR-absorbierenden Schicht. Aufgrund des Aufbaus des Mehrschichtkörpers und der verwendeten IR-Absorber ist kein einheitlicher Farbverlauf über den gesamten Bereich der Folie zu erwarten.

WO 2004/000549 A1 beschreibt einen Mehrschichtkörper aus laminiertem Glas. Der Aufbau enthält unter anderem eine IR-reflektierenden Schicht und eine IR-absorbierenden Schicht. Auch hier ist aufgrund der geringen Dicke der IR-absorbierenden Schicht und der verwendeten IR-Absorber kein einheitlicher Farbverlauf zu erwarten.

Die Kombination von Multilagenschichten mit einer angrenzenden, IR-absorberhaltigen Schicht ist exemplarisch in US-A 2008/0291541 und US-A 2006/0154049 beschrieben. Die IR-absorberhaltige Schicht ist bevorzugt eine maximal 50 µm dünne Beschichtung. Nachteilig an dem beschriebenen Aufbau ist die hohe Eigenfarbe der Absorberschicht und einhergehende sehr geringe Lichttransmission im sichtbaren Wellenlängenbereich. Die dünnen IR-absorberhaltigen Schichten weisen zudem einen Farbverlauf auf, da geringfügige Abweichungen in der Dicke die Farbe stark beeinträchtigen.

Es bestand daher weiterhin Bedarf an einem Kunststoff-Mehrschichtaufbau, welcher eine hohe Transmission (Ty) im sichtbaren Bereich mit geringer primärer und sekundärer Energietransmission (T_{TS}) aufweist, ohne dass die vorangehend genannten Nachteile auftreten.

Demnach bestand die Aufgabe der vorliegenden Erfindung darin, einen kunststoffbasierten Mehrschichtaufbau aufzufinden, der eine hohe Transmission (Ty) im sichtbaren Bereich mit geringer primärer und sekundärer Energietransmission (niedriger T_{TS}-Wert) aufweist. Der Aufbau sollte eine möglichst geringe Eigenfarbe, hohe Thermostabilität sowohl bei den Verarbeitungstemperaturen der Kunststoffe als auch beim Dauereinsatz in Verscheibungen sowie hohe Stabilität gegen dauerhafte Lichteinstrahlung aufweisen. Ferner sollen die Systeme Mobilfunk und Navigationsgeräte nicht beeinträchtigen, d.h. eine möglichst hohe Durchlässigkeit für Funkwellen aufweisen. Diese Mehrschichtaufbauten sollen für den langlebigen Einsatz in Verscheibungselementen für Gebäude- oder Fahrzeugverscheibungen geeignet sein, d.h. eine entsprechende Langlebigkeit bezüglich Licht- und Thermostabilität aufweisen. Auch ein ökonomisch vertretbares Preis/Leistungsverhältnis ist für derartige Einsatzbereiche von Interesse.

Diese Aufgabe konnte überraschend durch einem Mehrschichtaufbau enthaltend wenigstens eine transparente Kunststoff-Basisschicht enthaltend mindestens 0,030 Gew.% Nanopartikel auf Basis von Indium-Zinn-Oxid (ITO) und/oder Antimon-dotiertem Zinn-Oxid, bezogen auf das Gesamtgewicht der Kunststoffzusammensetzung für die Basisschicht, als IR-Absorber und wenigstens eine IR-Strahlung reflektierende Multilagenschicht, welche in den unmittelbar aneinander grenzenden Schichten unterschiedliche Kunststoffe und unterschiedliche Brechungsindizes aufweist, gelöst werden.

Gegenstand der vorliegenden Erfindung ist demnach ein Mehrschichtaufbau, dadurch gekennzeichnet, dass er
- wenigstens eine Basisschicht enthaltend wenigstens einen transparenten thermoplastischen Kunststoff sowie mindestens 0,038 Gew.-% bis 0,5 Gew.% Nanopartikel auf Basis von Indium-Zinn-Oxid (ITO) und/oder Antimon-dotiertem Zinn-Oxid (ATO), bezogen auf das Gesamtgewicht der Kunststoffzusammensetzung für die Basisschicht, als IR-Absorber, wobei die Basisschicht Lanthanhexaborid nicht als möglichen weiteren IR Absorber enthält, und
- wenigstens eine IR-Strahlung reflektierende Multilagenschicht, welche in den unmittelbar aneinander grenzenden Schichten unterschiedliche Kunststoffe und unterschiedliche Brechungsindizes aufweist,
enthält.

Überraschend verfügt der erfindungsgemäße Mehrschichtaufbau im Vergleich zu den aus dem Stand der Technik bekannten Systemen über einen niedrigen T_{TS}-Wert sowie eine geringere Eigenabsorption im sichtbaren Spektralbereich, was in einer geringeren Eigenfarbe resultiert. Bevorzugt weist der erfindungsgemäße Mehrschichtaufbau eine Transmission von mehr als 70 % im sichtbaren Wellenlängenbereich verbunden mit einem T_{TS}-Wert von weniger als 60 %, bevorzugt weniger als 58 %, insbesondere bevorzugt von weniger als 56 % auf. Die Eigenfarbe des erfindungsgemäßen Mehrschichtaufbaus entspricht einem neutralem grau mit einem a*-Wert von a* = 0 ± 5 und b* = 0 ± 5, bevorzugt a* = 0 ± 4 und b* = 0 ± 4 (Bestimmung der Farbe in Anlehnung an ASTM E1348 mit den in der ASTM E308 beschriebenen Gewichtungsfaktoren und Formeln; die Berechnung der CIELAB Farbkoordinaten L*, a*, b* erfolgt für Lichtart D 65 und 10° Normalbeobachter).

Der erfindungsgemäße Mehrschichtaufbau bietet den Vorteil, das sich die IR-Reflexionseigenschaften mit den IR-Absorptionseigenschaften weitestgehend synergistisch ergänzen, d.h. die IR-Absorber in einem Wellenlängenbereich eine hohe Absorptionsleistung aufweisen in welchem die IR-Reflexionsleistung der IR-Reflexionsschicht nur gering oder kaum vorhanden ist und umgekehrt die IR-Reflexionsschicht in einem Wellenlängenbereich eine besonders hohe IR-Reflexionsleistung aufweist in dem die Absorptionsleistung des IR-Absorbers gering ist. Vorzugsweise weisen die erfindungsgemäßen Mehrschichtaufbauten nur geringe Wellenlängenbereiche, bevorzugt Bereiche, die 100 nm oder weniger umfassen, auf, in denen sowohl eine hohe Reflexionsleistung von mehr als 30 % als auch eine signifikante Absorptionsleistung, d.h. einen IR-Transmissionsgrad von weniger als 20 % in der Basisschicht, gegeben ist. Die erfindungsgemäß eingesetzten anorganischen IR-Absorber verfügen darüber hinaus über ein gutes Preis/Leistungsverhältnis.

Die Basisschicht weist bevorzugt eine Schichtdicke von mindestens 500 µm, bevorzugt von mindestens 1 mm, besonders bevorzugt von mindestens 2 mm, ganz besonders bevorzugt von mindestens 3 mm auf. Hinsichtlich der maximalen Schichtdicke sind keine besonderen Grenzen gesetzt. Es sind vorzugsweise Schichtdicken von bis zu 2 cm, besonders bevorzugt von bis zu 8 mm, ganz bevorzugt von bis zu 7 mm für bestimmte Anwendungen üblich. In bestimmten Anwendungen, insbesondere für Schienen- und Luftfahrzeuge, kann die Dicke der Basisschicht insbesondere mehr als 8 mm, vorzugsweise 9 mm bis 20 mm betragen, wobei hierbei die Menge der entsprechenden IR-Absorber und gegebenenfalls Stabilisatoren entsprechend angepasst wird.

Als Antimon dotiertes Zinnoxid (ATO) wird insbesondere ein solches vom Typ SnO₂:Sb, d.h. mit Antimon dotiertem Zinn(IV)oxid, eingesetzt. Solches ATO ist kommerziell erhältlich. Als Indium-Zinn-Oxid (ITO) wird insbesondere ein Mischoxid aus Indium(III)-oxid und Zinn(IV)-oxid, bevorzugt ein solches mit 90 Mol-% Indium(III)-oxid (In₂O₃) und 10 Mol-% Zinn(IV)-oxid (SnO₂) eingesetzt. Ein solches ITO ist kommerziell erhältlich.

Die Nanopartikel auf Basis von Indium-Zinn-Oxid (ITO) und/oder Antimon-dotiertem Zinn-Oxid ist in der Basisschicht in einer Menge von 0,038 bis 0,500 Gew.-%, bevorzugt von 0,050 bis 0,250 Gew.-%, besonders bevorzugt von 0,063 bis 0,150 Gew.-%, bezogen auf das Gesamtgewicht der Kunststoffzusammensetzung für die Basisschicht, enthalten.

Der mittlere Partikeldurchmesser der erfindungsgemäß einzusetzenden Nanopartikel auf Basis von ATO oder ITO ist vorzugsweise kleiner als 200 nm, besonders bevorzugt kleiner als 100 nm und ganz besonders bevorzugt kleiner als 50 nm. In einer besonders bevorzugten Ausführungsform liegt der mittlere Partkeldurchmesser zwischen 1 nm und 50 nm.

Der mittlere Partikeldurchmesser kann mit Hilfe der Transmissionselektronenmikroskopie (TEM) bestimmt werden und stellt den arithmetischen Mittelwert der dabei ermittelten Partikelgrößen dar.

Die ITO- und/oder ATO-Partikel sind für Strahlung im sichtbaren Wellenlängenbereich des Spektrums durchlässig, wobei durchlässig bedeutet, dass die Absorption dieser IR-Absorber im sichtbaren Bereich des Lichts verglichen mit der Absorption im IR-Bereich gering ist und der IR-Absorber zu keiner deutlich erhöhten Trübung oder deutlichen Verminderung der Transmission (im sichtbaren Bereich des Lichts) der Zusammensetzung oder dem jeweiligen Endprodukt führt.

In einer weiteren Ausführungsform können optional neben den erfindungsgemäßen ATO- und/oder ITO-basierten Nanopartikeln zusätzlich weitere IR-Absorber in der thermoplastischen Zusammensetzung eingesetzt werden, wobei deren Gesamtmenge in einer derartigen Zusammensetzung aber jeweils unterhalb der Menge der ATO- und/oder ITO-basierten Nanopartikeln liegt. Bevorzugt werden - alle Mengenanteile der zusätzlichen IR-Absorber zusammen genommen - weniger als 0,03 Gew:-%, bezogen auf das Gesamtgewicht der Kunststoffzusammensetzung für die Basisschicht, an zusätzlichen IR-Absorbern eingesetzt, bezogen auf das Gesamtgewicht der Kunststoffzusammensetzung. Beim Einsatz von zusätzlichen IR-Absorbern werden bevorzugt - einschließlich ITO und/oder ATO als IR-Absorber - insgesamt zwei bis fünf, besonders bevorzugt zwei oder drei unterschiedliche IR-Absorber eingesetzt.

Die Basisschicht enthält kein Lanthanhexaborid (LaB₆). Es werden vorzugsweise keine weiteren Metallboride als zusätzliche anorganische IR-Absorber eingesetzt. In einer besonders bevorzugten Ausführungsform der vorliegenden Erfindung enthält die Basisschicht daher keine Metallboride.

Optional kann die Zusammensetzung der Basisschicht wenigstens einen weiteren IR-Absorber auf Wolframatbasis, bevorzugt Cäsiumwolframat, enthalten.

Geeignete zusätzliche organische IR-Absorber sind nach Stoffklassen z.B. in M. Matsuoka, Infrared Absorbing Dyes, Plenum Press, New York, 1990 beschrieben. Besonders geeignet sind IR-Absorber aus den Klassen der Phthalocyanine, der Naphthalocyanine, der Metallkomplexe, der Azofarbstoffe, der Anthraquinone, der Quadratsäurederivate, der Immoniumfarbstoffe, der Perylene, der Quaterylene sowie der Polymethine. Davon sind ganz besonders Phthalocyanine und Naphthalocyanine geeignet.

Optional kann die Zusammensetzung der Basisschicht wenigstens einen weiteren IR-Absorber auf Quaterylen-Basis enthalten.

Kombinationen der oben genannten Infrarot-Absorber sind besonders geeignet, da der Fachmann durch eine gezielte Auswahl eine Optimierung der Absorption im nahen Infrarotbereich erreichen kann.

In einer bevorzugten Ausführungsform kann die Basisschicht weiterhin wenigstens einen Ultraviolett-Absorber enthalten. Zum Einsatz in der Kunststoffzusammensetzung für die Basisschicht geeignete Ultraviolett-Absorber sind Verbindungen, die eine möglichst geringe Transmission unterhalb von 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete UV-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, Ciba Spezialitätenchemie, Basel), 2-(2'-Hydroxy-5'-(tert.-octyl)-phenyl)-benzotriazol (Tinuvin^{®} 329, Ciba Spezialitätenchemie, Basel), 2-(2'-Hydroxy-3'-(2-butyl)-5'-(tert.butyl)-phenyl)-benzotriazol (Tinuvin^{®} 350, Ciba Spezialitätenchemie, Basel), Bis-(3-(2H-benztriazolyl)-2-hydroxy-5-tert.-octyl)methan, (Tinuvin^{®} 360, Ciba Spezialitätenchemie, Basel), (2-(4,6-diphenyl-1,3,5-triazin-2-yl)-5-(hexyloxy)-phenol (Tinuvin^{®} 1577, Ciba Spezialitätenchemie, Basel), sowie der Benzophenone 2,4-Dihydroxy-benzophenon (Chimasorb^{®} 22 , Ciba Spezialitätenchemie, Basel) und 2-Hydroxy-4-(octyloxy)-benzophenon (Chimassorb^{®} 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul^{®} 3030, BASF AG Ludwigshafen), 2-[2-hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin^{®} B-Cap, Clariant AG).

Es können auch Mischungen dieser Ultraviolett-Absorber eingesetzt werden.

Hinsichtlich der Menge des in der Kunststoffzusammensetzung für die Basisschicht enthaltenen Ultraviolett-Absorbers liegen keine besonderen Beschränkungen vor, solange die gewünschte Absorption von UV-Strahlung sowie eine ausreichende Transparenz des aus der Zusammensetzung hergestellten Formkörpers gewährleistet sind. Bevorzugt enthält die Kunststoffzusammensetzung für die Basisschicht UV-Absorber in einer Gesamtmenge von 0,05 Gew.-% bis 20,00 Gew.-%, insbesondere von 0,07 Gew.-% bis 10,00 Gew.-% und ganz besonders bevorzugt von 0,10 Gew.-% bis 1,00 Gew.-%, bezogen auf das Gesamtgewicht der Kunststoffzusammensetzung für die Basisschicht.

Die Basischicht kann zudem zusätzlich wenigstens einen weiteren Stabilisator enthalten. Dies können beispielsweise und bevorzugt Thermostabilisatoren, Langzeitstabilisatoren und/oder Stabilisatoren für den Verarbeitungsprozess sein, wobei insbesondere solche Stabilisatoren oder Mischungen aus Stabilisatoren bevorzugt sind, die mehrere dieser Eigenschaften abdecken. Bevorzugt sind Phosphor-basierte Stabilisatoren oder Stabilisatoren auf phenolischer Basis. Geeignete zusätzliche Stabilisatoren sind Phosphine, Phosphite oder phenolischen Antioxidantien oder deren Mischungen, da diese ohne negative Auswirkungen auf die Beständigkeit der IR-Absorber in Verbindung mit diesen eingesetzt werden können. Kommerziell erhältliche geeignete und bevorzugte Stabilisatoren sind beispielsweise Triphenylphosphin, Irgafos® 168 (Tris(2,4-di-tert-butyl-phenyl)-phosphit) und Irganox® 1076 (2,6-Di-tert-butyl-4-(octadecanoxycarbonylethyl)-phenol), jeweils einzeln oder in Kombination.

In einer Ausführungsform der Erfindung ist die Kombination von IR-Absorbern auf Basis von ATO- und/oder ITO und Triphenylphosphin als Stabilisator bevorzugt. In einer weiteren Ausführungsform der Erfindung ist die Kombination von IR-Absorbern auf Basis von ATO-und/oder ITO und Triphenylphosphin sowie Irgafos® 168 (Tris(2,4-di-tert-butyl-phenyl)-phosphit) als Stabilisatoren bevorzugt. In einer weiteren Ausführungsform der Erfindung ist die Kombination von IR-Absorbern auf Basis von ATO- und/oder ITO und Triphenylphosphin sowie Irgafos® 168 (Tris(2,4-di-tert-butyl-phenyl)-phosphit) mit Irganox® 1076 (2,6-Di-tert-butyl-4-(octadecanoxycarbonylethyl)phenol) oder Irganox 1010 (Pentaerythrit-3-(4-hydroxy-3,5-di-tert-butylphenyl)propionat; CAS: 6683-1.9-8) als Stabilisatoren bevorzugt.

Die Menge an Optional eingesetzten Phosphinen beträgt bevorzugt 0,01 bis 0,20 Gew.-%, bezogen auf das Gesamtgewicht der Kunststoffzusammensetzung für die Basisschicht. Die Menge an optional eingesetzten Phosphiten beträgt bevorzugt 0,20 Gew.-% - 0,01 Gew.-%, insbesondere bevorzugt 0,10 Gew.-% - 0,02 Gew.-%, bezogen auf das Gesamtgewicht der Kunststoffzusammensetzung für die Basisschicht Die Menge an optional eingesetzten phenolischen Antioxidantien beträgt bevorzugt 0,100 Gew.-% - 0,001 Gew.-%, insbesondere bevorzugt 0,050 Gew.-% - 0,005 Gew.-%, bezogen auf das Gesamtgewicht der Kunststoffzusammensetzung für die Basisschicht.

Als transparente thermoplastische Kunststoffe für die Basisschicht im Sinne der Erfindung sind z.B. Polymerisate von ethylenisch ungesättigten Monomeren und/oder Polykondensate von bifunktionellen reaktiven Verbindungen geeignet. Beispiele für transparente thermoplastische Polymere sind Polycarbonate oder Copolycarbonate auf Basis von Diphenolen, Poly- oder Copolyestercarbonate, Poly- oder Copolyacrylate und Poly- oder Copolymethacrylat wie z.B. Poly-oder Copolymethylmethacrylate, wie z.B. PMMA, sowie Copolymere mit Styrol wie z.B. transparentes Polystyrolacrylnitril (PSAN) oder Poly- oder Copolymere auf der Basis. von Ethylen und/oder Propylen sowie aromatische Poly- oder Copolyester wie Poly- oder Copolyethylenterephthalat (PET), Poly- oder Copolyethylennaphthalat (PEN), Poly- oder Copolybutylenterephthalat (PBT) oder glycol-modifiziertes PET (PETG) und transparente thermoplastische Polyurethane. Ferner können auch Poly- oder Copolymere auf Basis von zyklischen Olefinen (z.B. TOPAS TM, ein Handelsprodukt der Firma Ticona), Poly- oder Copolykondensate der Terephthalsäure wie z.B. Poly- oder Copolyethylenterephthalate (PET oder CoPET) oder PETG eingemischt werden. Auch Mischungen von mehreren transparenten thermoplastischen Polymeren sind möglich.

Bevorzugte transparente thermoplastische Kunststoffe sind Polymethylmethacrylat, aromatische Polyester, Polycarbonate oder Copolycarbonate, wobei Polycarbonate oder Copolycarbonate besonders bevorzugt sind.

Besonders bevorzugte Poly- oder Copolycarbonate sind das Homopolycarbonat auf Basis von 2,2-Bis-(4-hydroxyphenyl)-propan (Bisphenol A), das Homopolycarbonat auf Basis von 1,3-Bis-(4-hydroxyphenyl)-3,3,5-trimethylcyclohexan und die Copolycarbonate auf Basis der beiden Monomere 2,2-Bis-(4-hydroxyphenyl)-propan (Bisphenol A) und 1,1-Bis-(4-hydroxyphenyl)-3,3,5-trimethylcyclohexan.

Im Folgenden werden sowohl Homopolycarbonate als auch Copolycarbonate gemeinsam als Polycarbonate bezeichnet. Die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und Verzweigem. Die erfindungsgemäßen Polycarbonate können nach jedem bekanten Verfahren hergestellt werden, z.B. durch das Phasengrenzflächenverfahren oder durch das Schmelzeumsterungsverfahren, wobei aber Polycarbonate aus dem Phasengrenzflächenverfahren bevorzugt sind. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schliesslich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, B i s-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kemalkylierte und kemhalogenierte Verbindungen.

Bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diarylverbindungen ausgewählt aus der Gruppe Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Besonders bevorzugte Kohlensäurederivate sind Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind Phenol selbst, Alkylphenole wie Kresole, p-tert.-Butylphenol, Cumylphenol, p-n-Octylphenol, p-isoOctylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen. Bevorzugte Monophenole sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Bevorzugte Kettenabbrecher sind ferner die Phenole welche ein oder mehrfach mit C₁ bis C₃₀-Alkylresten, linear oder verzweigt, bevorzugt unsubstituiert oder mit tert.-Butyl substituiert sind.

Die Menge an einzusetzendem Kettenabbrecher beträgt bevorzugt 0,1 bis 5 Mol%, bezogen auf die Stoffmenge an jeweils eingesetzten Diphenolen.

Geeignete Verzweiger sind die in der Polycarbonatchemie bekannten tri- oder mehr als trifünktionellen Verbindungen, insbesondere solche mit drei oder mehr als drei phenolischen OH-Gruppen. Geeignete Verzweiger sind beispielsweise Phloroglucin, 4,6-Dimethyl-2,4,6-tri-(4-hydroxyphenyl)-hepten-2 , 4 , 6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol. Besonders bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt bevorzugt 0,05 Mol% bis 2,00 Mol%, bezogen wiederum auf die Stoffmenge an jeweils eingesetzten Diphenolen. Die aromatischen Polycarbonate der vorliegenden Erfindung besitzen Gewichtsmittelmolekulargewichte Mw (ermittelt durch Gelpermeationschromatographie und Eichung mit Polycarbonateichung) zwischen 5000 und 200.000, vorzugsweise zwischen 10.000 und 80.000 und besonders bevorzugt zwischen 15.000 und 40.000 (dies entspricht in etwa zwischen 12.000 und 330.000, vorzugsweise zwischen 20.000 und 135.000 und besonders bevorzugt zwischen 28.000 und 69.000 ermittelt durch Gelpermeationschromatographie und Eichung mittels Polystyrolstandard).

Die Kunststoffzusammensetzungen für die Basisschicht können zudem optional noch weitere übliche Polymeradditive enthalten, wie z.B. die in EP-A 0 839 623, WO-A 96/15102, EP-A 0 500 496 oder "Plastics Additives Handbook", Hans Zweifel, 5th Edition 2000, Hanser Verlag, München) beschriebenen Flammschutzmittel, optische Aufheller, Farbmittel, Pigmente Fließverbesserer oder Verarbeitungshilfsmittel, wie z.B. Entformungsmittel, in den für die jeweiligen thermoplastischen Kunststoffe üblichen Mengen.
Bevorzugt werden die weiteren Polymeradditive in Mengen von 0 Gew.-% bis zu 5 Gew.-%, bevorzugt 0,1 Gew.-% bis 1 Gew.-%; jeweils bezogen auf die Menge der jeweiligen Polymer-Gesamtzusammensetzungen. Auch Mischungen mehrerer Zusatzstoffe sind geeignet.

Geeignete Farbmittel oder Pigmente sind beispielsweise Schwefel-haltige Pigmente wie Cadmium Red and Cadmium Gelb, Eisencyanid basierte Pigmente wie Berliner Blau, Oxid-Pigmente wie Titandioxid, Zinkoxid, rotes Eisenoxid, schwarzes Eisenoxid, Chromoxid, Titangelb, Zink-Eisen basiertes Braun, Titan-Cobalt basiertes Grün, Cobaltblau, Kupfer-Chrom basiertes Schwarz und Kupfer-Eisen basiertes Schwarz oder Chrom-basierte Pigmente wie Chromgelb, Phthalocyaninabgeleitete Farbstoffe wie Kupfer-Phthalocyanin Blau and Kupfer Phthalocyanin Grün, kondensierte polycyclische Farbstoffe und Pigmente wie Azo-basierende (z.B. Nickel-Azogelb), Schwefel-Indigo-Farbstoffe, Perynon-basierte, Perylene-basierte, Chinacridon-abgeleitete, Dioxazin-basierte, Isoindolinon-basierte und Chinophthalon-abgeleitete Derivate, Anthrachinonbasierte oder heterocyclische Systeme.

Konkrete Beispiele für Handelsprodukte sind z.B. MACROLEX^{®} Blau RR, MACROLEX^{®} Violett 3R, MACROLEX^{®} Violett B (Lanxess AG, Deutschland), Sumiplast^{®} Violett RR, Sumiplast^{®} Violett B, Sumiplast^{®} Blau OR, (Sumitomo Chemical Co., Ltd.), Diaresin^{®} Violett D, Diaresin^{®} Blau G, Diaresin^{®} Blau N (Mitsubishi Chemical Corporation), Heliogen^{®} Blau oder Heliogen^{®} Grün (BASF AG, Deutschland).

Von diesen sind Cyaninderivate, Chinolinderivate, Anthrachinonderivate, Phthalocyaninderivate besonders bevorzugt.

Besonders geeignete Entformungsmittel für die erfindungsgemäßen Zusammensetzungen sind z.B. Pentaerythrittetrastearat (PETS) oder Glycerinmonostearat (GMS).

Bevorzugt kann es sich bei der IR-Strahlung reflektierende Multilagenschicht um einen mehrschichtigen optischen Interferenzfilm handeln: Solche Interferenzfilme können vorzugsweise durch Coextrusion sich abwechselnder Polymerschichten hergestellt werden. Solche Interferenzfilme können vorzugsweise als separate Interferenzfolie mittels Coextrusion hergestellt werden. Sie zeichnen sich durch schmale Reflexionsbereiche infolge von Lichtinterferenz aus.

Die IR-Strahlung reflektierende Multilagenschicht ist vorzugsweise aus mehreren parallelen übereinander angeordneten Schichten aus transparenten thermoplastischen Kunststoffen aufgebaut, wofür die vorangehend für die Basisschicht genannten thermoplastischen Kunststoffe in Frage kommen. Insbesondere sind hier aromatische Poly- oder Copolyester, wie z.B. Poly- oder Copolyethylenterephthalat (PET), Poly- oder Copolyethylennaphthalat (PEN), Poly- oder Copolybutylenterephthalat (PBT) oder glycol-modifiziertes PET (PETG), oder Poly- oder Copolyacrylate und Poly- oder Copolymethacrylat, wie z.B. Poly- oder Copolymethylmethacrylate, wie z.B. PMMA, geeignet. Die jeweils unmittelbar aneinander grenzenden Schichten bestehen vorzugsweise aus unterschiedlichen thermoplastischen Kunststoffen. Die Brechungsindices der jeweils unmittelbar aneinander grenzenden Schichten unterscheiden sich bevorzugt mindestens um 0,03, besonders bevorzugt um mindestens 0,06 voneinander. Eine solche IR-Strahlung reflektierende Multilagenschicht enthält vorzugsweise mindestens 10 Schichten. Bevorzugt handelt es sich um einen alternierenden Aufbau, bei dem sich Schichten aus zwei unterschiedlichen thermoplastischen Kunststoffen und mit unterschiedlichen Brechungsindizes abwechseln. Besonders bevorzugt ist dabei ein Schichtaufbau bei dem sich Schichten aus wenigstens einem aromatischen Poly- oder Copolyester und wenigstens einem Poly- oder Copolyacrylate bzw. Poly-oder Copolymethacrylat abwechslen. Optional kann dieser Schichtaufbau einseitig oder beidseitig mit einer Schutzschicht zur mechanischen Stabilisierung versehen sein. Für das Kunststoffmaterial dieser Schutzschicht ist beispielsweise ein aromatischer Poly- oder Copolyester geeignet und bevorzugt.

Die einzelnen Schichten der IR-Strahlung reflektierenden Multilagenschicht sind vorzugsweise sehr dünn mit Schichtdicken im Bereich von etwa 30 bis 500 nm, vorzugsweise ungefähr 50 bis 400 nm. Die Gesamtschichtdicke der Multilagenfolie beträgt bevorzugt 10 bis 500 µm insbesondere bevorzugt 15 bis 250 µm und ganz besonders bevorzugt 20 bis 100 µm. Dadurch kommt eine Verstärkungsinterferenz von an den vielen Grenzflächen reflektierten Lichtwellen zustande. Abhängig von der Schichtdicke und dem Brechungsindex der thermoplastischen Kunststoffe der einzelnen Schichten in der Multilagenschicht wird ein vorherrschendes Wellenlängenband reflektiert, während das übrige Licht von der Folie durchgelassen wird. Die Menge des reflektierten Lichts (Reflexionsvermögen) hängt vom Unterschied zwischen den Brechungsindizes, im Fall des alternierenden Aufbaus vom Unterschied zwischen den zwei Brechungsindices, vom Verhältnis der optischen Dicken der Schichten, von der Anzahl der Schichten und von der Gleichförmigkeit der Schichtdicken ab.

Solche IR-Strahlung reflektierenden Multilagenschichten, insbesondere in Form von Folien, sind dem Fachmann bekannt und beispielsweise beschrieben in US 3.610.729, US 3.711.176, US 4.446.305, US 4.540.623, US 5.448.404, US 5.882.774, US 6.531.230, US 6.783.349, WO-A 99/39224 und WO-A 03/100521 beschrieben. Sie sind zudem kommerziell in Form von Folien erhältlich.

In einer bevorzugten Ausführungsform besitzt die Basisschicht einen niedrigen IR-Transmissionsgrad im Wellenlängenbereich von 800 bis 2300 nm, besonders bevorzugt im Wellenlängenbereich von 1200 bis 2300 nm, ganz besonders bevorzugt im Wellenlängenbereich von 1400 bis 2300 nm.

In einer bevorzugten Ausführungsform ist der IR-Transmissionsgrad im Wellenlängenbereich von 1200 nm bis 2300 nm kleiner als 20 %, bevorzugt kleiner als 15 %. Besonders bevorzugt ist der IR-Transmissionsgrad im Wellenlängenbereich von 1400 nm bis 2300 nm kleiner als 10 %, insbesondere bevorzugt kleiner als 6%.

Der IR-Transmissionsgrad ist gegeben durch die Integration des Sonnenspektrums (Sonnenspektrum nach ASTM G173-3) gewichtet mit der Transmission und normiert auf das Sonnenspektrum nach ASTM G173-3 für den jeweilig angegebenen Wellenlängenbereich.

In einer weiteren bevorzugten Ausführungsform reflektiert die Multilagenschicht 30 % der IR-Strahlung im Wellenlängenbereich von 850 bis 1800 nm, besonders bevorzugt im Wellenlängenbereich von 850 bis 1500 nm (bestimmt nach ASTM D 1003). Besonders bevorzugt reflektiert die Multilagenschicht 40 % der IR-Strahlung im Wellenlängenbereich von 800 bis 1200 nm.

Bevorzugt werden die Absorptionseigenschaften der Basisschicht derart eingestellt, dass sie sich hinsichtlich der Wellenlängenbereiche, in denen sie einen geringen IR-Transmissionsgrad aufweisen (geringer als 20 %), nicht signifikant mit den Reflexionseigenschaften der Multilagenschicht, d.h. den Wellenlängenbereiche, in denen diese mehr als 40 % der IR-Strahlung reflektiert, überschneiden.

Der erfindungemäße Mehrschichtaufbau weist bevorzugt auf mindestens einer Seite, besonders bevorzugt beidseitig eine Kratzfestbeschichtung auf. Diese Kratzfestbeschichtung kann zusätzliche UV-Absorber enthalten. Bevorzugt sind Zweischichtsysteme als Kratzfestbeschichtungen Besonders bevorzugt ist ein System in dem die äußerste Schicht des Zweischichtsystems eine Siloxan-basierte Kratzfestbeschichtung ist, welche ganz besonders bevorzugt zusätzliche UV-Absorber aufweist.

Die erfindungsgemäßen Mehrschichtaufbauten weisen einen niedrigen T_{TS}-Wert bei gleichzeitig hoher Lichttransmission im sichtbaren Wellenlängenbereich auf. Zusätzlich weisen die erfindungsgemäßen Mehrschichtaufbauten eine neutrale Eigenfarbe auf.

Die erfindungsgemäßen Mehrschichtaufbauten lasen sich auf einfache Weise herstellen.

Gegenstand der vorliegenden Erfindung ist daher weiterhin ein Verfahren zur Herstellung eines erfindungsgemäßen Mehrschichtaufbaus, dadurch gekennzeichnet, dass
A) eine Kunststoffzusammensetzung enthaltend wenigstens einen transparenten thermoplastischen Kunststoff, Nanopartikel auf Basis von Indium-Zinn-Oxid (ITO) und/oder Antimon-dotiertem Zinn-Oxid sowie gegebenenfalls wenigstens einen UV-Absorber und/oder wenigstens einen Stabilisator hergestellt wird,
B) aus der unter A) erhaltenen Kunststoffzusammensetzung mittels Extrusion oder Spritzguss, ein Kunststoffsubstrat hergestellt wird,
C) auf das unter B) erhaltene Kunststoffsubstrat unter Verwendung eines Klebstoffes und/oder mittels Lamination eine Multilagenfolie aufgebracht wird,
D) gegebenenfalls auf eine oder beide Außenseiten des unter C) erhaltenen Produktes wenigstens eine kratzfeste Beschichtung aufgebracht wird.

Die Herstellung der Kunststoffzusammensetzung gemäß A) enthaltend wenigstens einen transparenten thermoplastischen Kunststoff, Nanopartikel auf Basis von Indium-Zinn-Oxid (ITO) und/oder Antimon-dotiertem Zinn-Oxid sowie gegebenenfalls wenigstens einen UV-Absorber und/oder wenigstens einen Stabilisator und optional weitere übliche Polymeradditive erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die IR-Absorber, Thermostabilisatoren, UV-Absorber und sonstigen Additive der erfindungsgemäßen Zusammensetzung durch bekannte Verfahren oder als Masterbatch eingebracht werden.

Die Verwendung von Masterbatchen ist insbesondere zum Einbringen des IR-Absorbers bevorzugt, wobei insbesondere Masterbatche auf Basis von Polycarbonat verwendet werden, in die die IR-Absorber in Form einer gebrauchsfertigen IR-Absorberformulierung enthaltend Dispergiermittel. Durch Verwendung dieser Masterbatche in Kombination mit den entsprechenden IR-Absorberformulierungen wird eine Agglomeration des IR-Absorbers in der Polymerzusammensetzung wirksam verhindert.

Die ITO- und/oder ATO-Nanopartikel können als pulverförmige Dispersion eingesetzt werden.

Die anorganischen ITO- oder ATO-Nanopartikel können mitwenigstens einem Dispergiermittel und weiteren organischen Lösemitteln, wie z.B. Toluol, Benzol oder anderen aromatischen Kohlenwasserstoffen, vermischt und in geeigneten Mühlen, wie z.B. Kugelmühlen, unter Zugabe von Zirkoniumoxid (z.B. mit einem Durchmesser von 0,3 mm) gemahlen werden, um die gewünschte Partikelgrößenverteilung herzustellen. Man erhält die ITO- oder ATO-Nanopartikel in Form einer Dispersion. Nach Mahlung können gegebenenfalls weitere Dispergiermittel zugesetzt werden. Das Lösungsmittel wird bei erhöhten Temperaturen und reduziertem Druck entfernt.

Für den Einsatz in transparenten Thermoplasten werden die so erhaltenen ITO- oder ATO-Nanopartikel bevorzugt in einer organischen Matrix, z.B. in einem polymeren Dispergiermittel, dispergiert und gegebenenfalls wie oben beschrieben in einer Mühle unter Verwendung geeigneter Hilfsstoffe wie z.B. Zirkoniumdioxid und ggf. unter Verwendung von organischen Lösungsmitteln wie zum Beispiel Toluol, Benzol oder ähnlichen Kohlenwasserstoffen gemahlen und das oder die Lösungsmittel anschließend bei erhöhten Temperaturen und reduziertem Druck entfernt.

Geeignete Dispergiermittel sind vor allem polymere Dispergiermittel, vorzugsweise solche Dispergiermittel, die eine hohe Lichttransmission aufweisen. In Frage kommen beispielsweise und bevorzugt Polyacrylate, Polyurethane, Polyether, Polyester oder Polyesterurethane.

Für die vorliegende Erfindung geeignete Dispergiermittel sind kommerziell erhältlich. Geeignete Dispergiermittel auf Polyacrylat-Basis sind z.B. unter den Handelsnamen EFKA^{®}, z.B. EFKA^{®} 4500 und EFKA^{®} 4530 bei Ciba Specialty Chemicals erhältlich. Polyesterhaltige Dispergiermittel sind ebenfalls geeignet. Sie sind beispielsweise unter den Handelsnamen Solsperse^{®}, z.B. Solsperse^{®} 22000, 24000SC, 26000, 27000 von Avecia erhältlich. Ferner sind polyetherhaltige Dispergiermittel z.B. unter den Handelsnamen Disparlon^{®} DA234 und DA325 der Firma Kusumoto Chemicals bekannt. Auch Polyurethan basierte Systeme sind geeignet. Polyurethanbasierte Systeme sind unter dem Handelsnamen EFKA^{®} 4046, EFKA^{®} 4047 von Ciba Specialty Chemicals erhältlich. Texaphor^{®} P60 und P63 sind entsprechende Handelsnamen der Cognis.

Als Dispergiermittel bevorzugt sind Polyacrylate, Polyether und Polyester-basierte Polymere, wobei als hochtemperaturstabile Dispergiermittel Polyacrylate wie z.B. Polymethylmethacrylat oder Polymethylacrylat (zusammen benannt als Polymethyl(meth)acrylat) und Polyester besonders bevorzugt sind. Es können auch Mischungen dieser Polymere oder auch Copolymere auf Acrylatbasis eingesetzt werden. Derartige Dispergierhilfsmittel und Methoden zur Herstellung derartiger ATO-Nanopartikel-Dispersionen sind z.B. in der JP-A 2009-235303 und DE-A 69 930 822 beschrieben. Insbesondere sind Dispergiermittel auf Polyacrylat-Basis geeignet.

Die Menge des ITO- oder ATO-Nanopartikel im Dispergiermittel beträgt bevorzugt 0,2 Gew.-% bis 80,0 Gew-%, besonders bevorzugt 1,0 Gew.-% bis 40,0 Gew-%, ganz besonders bevorzugt 5 Gew-% bis 35 Gew-%, und in ganz besonders bevorzugten Ausführungsformen 10 Gew-% bis 30 Gew-% bezogen auf das Gesamtgewicht der erfindungsgemäß eingesetzten Dispersion enthaltend die ITO- oder ATO-Nanopartikel. In der Gesamtzusammensetzung der gebrauchsfertigen IR-Absorberdispersion können neben dem IR-Absorber und dem Dispergiermittel noch weitere Hilfsstoffe wie zum Beispiel Zirkoniumdioxid sowie Restlösemittel wie zum Beispiel Toluol, Benzol oder ähnliche aromatische Kohlenwasserstoffe enthalten sein.

Die Kunststoffzusammensetzung für die Basisschicht gemäß A) kann in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die transparenten thermoplastischen Kunststoffzusammensetzung können zu geeigneten Substraten, beispielsweise in Form von Platten, Folien oder Formkörpern verarbeitet werden. Dazu kann die Kunststoffzusammensetzung gemäß A) zunächst wie beschrieben zu Granulat verarbeitet und dieses Granulat durch geeignete Verfahren zu verschiedenen Substraten in bekannter Weise, z.B. mittels Extrusion oder Spritzguss verarbeitet. Dabei umfasst die Verarbeitung mittels Extrusion auch die Coextrusion.

Das Kunststoffsubstrat für die erfindungsgemäßen Schichtsysteme kann in diesem Zusammenhang beispielsweise durch Heißpressen, Spinnen, Blasformen, Tiefziehen, Extrudieren oder Spritzgießen in Erzeugnisse oder Formkörper, geformte Gegenstände wie Spielzeugteile, Fasern, Folien, Bändchen, Platten wie Massivplatten, Stegplatten, Doppelstegplatten oder Wellplatten, Gefäße, Rohre oder sonstige Profile, überführt werden.

Zur Extrusion wird die gegebenenfalls z.B. mittels Trocknung vorbehandelte Kunststoffzusammensetzung dem Extruder zugeführt und im Plastifizierungssystem des Extruders aufgeschmolzen. Die Kunststoffschmelze wird dann durch eine Breitschlitzdüse oder eine Stegplattendüse gedrückt und dabei verformt, im Walzenspalt eines Glättkalanders in die gewünschte endgültige Form gebracht und durch wechselseitige Kühlung auf Glättwalzen und der Umgebungsluft formfixiert. Es werden die zur Extrusion der Polymer-Zusammensetzung notwendigen Temperaturen eingestellt, wobei üblicherweise den Herstellerangaben gefolgt werden kann. Enthalten die Polymerzusammensetzungen beispielsweise Polycarbonate mit hoher Schmelzeviskosität, so werden diese normalerweise bei Schmelzetemperaturen von 260 °C bis 320 °C verarbeitet, entsprechend werden die Zylindertemperaturen des Plastifizierzylinders sowie die Düsentemperaturen eingestellt.

Durch Einsatz von einem oder mehreren Seitenextrudern und einer Mehrkanal-Düse oder gegebenenfalls geeigneten Schmelzeadaptern vor einer Breitschlitzdüse lassen sich thermoplastische Schmelzen verschiedener Zusammensetzung übereinander legen und somit mehrschichtige Platten oder Folien erzeugen, wobei eine dieser Schichten die Basisschicht im Sinne dieser Erfindung ist (für die Coextrusion siehe beispielsweise EP-A 0 110 221, EP-A 0 110 238 und EP-A 0 716 919, für Details des Adapter- und Düsenverfahrens siehe Johannaber/Ast:"Kunststoff-Maschineführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990).

Mit den oben beschriebenen thermoplastischen Substraten lassen sich Formkörper auch durch Spritzguss herstellen. Die Verfahren hierzu sind dem Fachmann bekannt und im "Handbuch Spritzgießen", Friedrich Johannnaber/Walter Michaeli, München; Wien: Hanser, 2001, ISBN 3-446-15632-1 oder "Anleitung zum Bau von Spritzgiesswerkzeugen", Menges/Michaeli/Mohren, München; Wien: Hanser, 1999, ISBN 3-446-21258-2 beschrieben.

Bei diesem Verfahren wird mit einer Spritzgießmaschine der jeweilige Werkstoff, beziehungsweise die Formmasse, in einer Spritzeinheit plastifiziert und in ein Spritzgießwerkzeug eingespritzt. Der Hohlraum, die Kavität, des Werkzeugs bestimmt die Form und die Oberflächenstruktur des fertigen Bauteils.

Spritzguss umfasst im Rahmen der Erfindung alle Spritzgießverfahren einschließlich Mehrkomponentenspritzguss und Spritzprägeverfahren. Zur Herstellung von Kunststoffformteilen werden die in der Kunststoffverarbeitung bekannten Spritzguss- und Spritzprägevarianten eingesetzt.

Herkömmliche Spritzgussverfahren ohne Spritzprägetechnik werden insbesondere für die Herstellung von kleineren Spritzgussteilen verwendet, bei welchen kurze Fliesswege auftreten und mit moderaten Spritzdrücken gearbeitet werden kann. Beim herkömmlichen Spritzgussverfahren wird die Kunststoffmasse in eine zwischen zwei geschlossenen lagefesten Formplatten ausgebildete Kavität eingespritzt und verfestigt sich dort.

Spritzprägeverfahren unterscheiden sich von herkömmlichen Spritzgussverfahren dadurch, dass der Einspritz- und/oder Verfestigungsvorgang unter Ausführung einer Formplattenbewegung durchgeführt wird. Beim bekannten Spritzprägeverfahren sind die Formplatten vor dem Einspritzvorgang bereits etwas geöffnet, um die bei der späteren Verfestigung auftretende Schwindung auszugleichen und den benötigten Spritzdruck zu reduzieren. Schon zu Beginn des Einspritzvorganges ist daher eine vorvergrößerte Kavität vorhanden. Tauchkanten des Werkzeuges garantieren auch bei etwas geöffneten Formplatten noch eine ausreichende Dichtigkeit der vorvergrößerten Kavität. Die Kunststoffmasse wird in diese vorvergrößerte Kavität eingespritzt und währenddessen bzw. anschließend unter Ausführung einer Werkzeugbewegung in Schließrichtung verpresst. Insbesondere bei der Herstellung von großflächigen und dünnwandigen Formteilen mit langen Fliesswegen ist die aufwändigere Spritzprägetechnik bevorzugt oder gegebenenfalls zwingend erforderlich. Nur auf diese Weise wird eine Reduzierung der bei großen Formteilen benötigten Spritzdrücke erreicht. Ferner können Spannungen bzw. Verzug im Spritzgussteil, welche infolge hoher Spritzdrücke auftreten, durch Spritzprägen vermieden werden. Dies ist besonders bei der Herstellung von optischen Kunststoffanwendungen, wie beispielsweise Verscheibungen (Fenstern) in Kraftfahrzeugen, wichtig, da bei optischen Kunststoffanwendungen erhöhte Anforderungen an die Spannungsfreiheit einzuhalten sind.

Die IR-Absorber auf Basis von ITO und/oder ATO weisen dabei eine hohe Thermostabilität bei den Verarbeitungstemperaturen der Kunststoffe auf, so dass ihre IR-Absorptionsleistung durch die Kunststoffverarbeitung nicht oder nur minimal, bevorzugt nicht beeinträchtigt wird.

Das Aufbringen der Multilagenfolie auf das Substrat kann unter Einsatz eines Klebstoffes und/oder mittels Lamination erfolgen, wobei die Aufbringung mittels Lamination sowohl mit Unterstützung durch einen Klebstoff als auch unter vollständigem Verzicht auf einen Klebstoff erfolgen kann. Des Weiteren kann die Multilagenfolie mit entsprechenden Materialien der thermoplastischen Basisschicht hinterspritzt werden um einen Verbund aus der thermoplastischen Basisschicht und Multilagenfolie herzustellen.

Im Falle der Aufbringung unter Verwendung eines Klebers ist ganz besonders bevorzugt die Verwendung eines latent reaktiven Klebstoffs.

Latent reaktive Klebstoffe sind dem Fachmann bekannt. Bevorzugte latent reaktive Klebstoffe sind solche, die eine wässrige Dispersion aufweisen, die ein Di- oder Polyisocyanat mit Schmelz- bzw. Erweichungstemperatur von > 30°C und ein mit Isocyanat-reaktives Polymer enthalten. Vorzugsweise weist eine solche wässrige Dispersion eine Viskosität von mindestens 2000 mPas auf. Weiterhin bevorzugt handelt es sich bei dem Isocyanat-reaktiven Polymer in dieser Dispersion um ein Polyurethan, das aus kristallisierenden Polymerketten aufgebaut sind, welche bei Messung mittels thermomechanischer Analyse (TMA) bei Temperaturen unter +110°C, bevorzugt bei Temperaturen unter +90°C, partiell oder vollständig dekristallisieren. Die Messung mittels TMA wird analog zu ISO 11359 Teil 3 "Bestimmung der Penetrationstemperatur" durchgeführt. Weiterhin bevorzugt handelt es sich bei dem Di- oder Polyisocyanat um ein solches ausgewählt aus der Gruppe bestehend aus Dimerisierungsprodukten, Trimerisierungsprodukten und Harnstoff-Derivaten des TDI (Toluylen-diisocyanat) bzw. IPDI (Isophorondiisocyanat). Solche latent reaktiven Klebstoffe sind beispielsweise in DE-A 10 2007 054 046 beschrieben.

In einer besonderen Ausführungsform können die erfindungsgemäßen Mehrschichtaufbauten ein oder beidseitig, bevorzugt beidseitig mit einer Kratzfestbeschichtung beschichtet werden, die vorzugsweise zusätzliche UV-Absorber enthält. Diese Beschichtung dient dem Schutz des Mehrschichtaufbaus gegenüber mechanischer Beeinträchtigung der Oberfläche (z.B. Verkratzen) sowie gegenüber allgemeinen Witterungseinflüssen (z.B. Schädigung durch UV-Strahlung des Sonnenlichtes) und erhöht somit die Beständigkeit der entsprechend ausgerüsteten Produkte.

Es sind verschiedene Methoden bekannt, um eine Kratzfestbeschichtung auf Kunststoffartikeln herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können beispielsweise über Tauchverfahren, Spincoating, Sprühverfahren oder Fließbeschichtung aufgebracht werden. Die Aushärtung kann thermisch oder mittels UV-Bestrahlung erfolgen. Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma. Weitere zusätzlich mögliche Beschichtungen wie z.B. Antibeschlags- oder sonstige Beschichtungen können ebenfalls über Plasmaverfahren hergestellt werdenn der Kratzfestschicht können verschiedene Additive, wie z.B. UV-Absorber, abgeleitet z.B. von Triazolen oder Triazinen, vorhanden sein. Diese Additive können im Kratzfestlack selbst oder in der Primerschicht enthalten sein. Die Dicke der Kratzfestschicht beträgt vorzugsweise 1 µm bis 20 µm, bevorzugt 2 µm bis 15 µm. Unterhalb von 1 µm ist die Beständigkeit von anorganischen Kratzfestschichten meist ungenügend. Oberhalb von 20 µm besteht die Gefahr von Rissbildung im Lack. Der erfindungsgemäße Mehrschichtaufbau wird bevorzugt nach Fertigstellung mittels Extrusion oder Spritzguss mit wenigstens einer solchen vorangehend beschriebenen Kratzfestschicht versehen.

Für die Beschichtung von Polycarbonat basierten Oberflächen wird bevorzugt ein UV-Absorber enthaltener Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten. Das jeweilige Primer-Harz kann aus einer Vielzahl von Materialien ausgewählt werden und ist z.B. in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melamin-basierte, Epoxy- und Alkyd-Systeme oder Mischungen dieser Systeme eingesetzt werden. Das Harz wird meist in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50°C und 130°C eingesetzt - häufig nach dem ein Großteil des Lösemittels kurzzeitig bei Raumtemperatur entfernt wurde. Kommerziell erhältliche Systeme sind z.B. SHP470, SHP470FT2050 und SHP401 der Firma Momentive Performance Materials. Derartige Beschichtungen sind z.B. in US 6350512 B1, US 5869185, EP 1308084, WO 2006/108520 beschrieben.

Bevorzugte Kratzfest-Lacke sind aus Siloxanen aufgebaut und enthalten vorzugsweise UV-Absorber. Sie werden bevorzugt über Tauch- oder Fließverfahren aufgebracht. Die Aushärtung erfolgt bevorzugt bei Temperaturen von 50°C bis 130°C. Kommerziell erhältliche Systeme sind z.B. AS4000, SHC5020 und AS4700 von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylakoxysilanen unter Säure- oder Basenkatalyse. Optional können Nanopartikel eingearbeitet werden. Bevorzugte Lösemittel sind Alkohole wie Butanol, Isopropanol, Methanol, Ethanol, Methoxypropanole und deren Mischungen.

Anstelle von Primer/Kratzfestbeschichtungs-Kombinationen können Einkomponenten-Hybrid-Systeme eingesetzt werden. Diese sind z.B. in EP-A 570 165, WO-A 2008/071363 oder DE-A 28 04 283 beschrieben. Kommerziell erhältliche Hybrid-Systeme sind z.B. unter den Namen PHC587 oder UVHC 3000 von Momentive Performance Materials erhältlich.

Die erfindungsgemäßen Mehrschichtaufbauten eignen sich insbesondere zur Herstellung von Platten, Folien, Verscheibungen, beispielsweise Fahrzeugfenster oder -dächer, wie z.B. Autofenster, Autosonnendächer, Fenster für Züge oder Flugzeuge, Panoramadächer, Bedachungen oder Gebäudeverglasungen, die die erfindungsgemäßen Mehrschichtaufbauten enthalten. Dabei können auch Doppelstegplatten oder Multistegplatten verwendet werden. Als weitere Komponenten der erfindungsgemäßen Erzeugnisse neben den erfindungsgemäßen Zusammensetzungen können beispielsweise weitere Werkstoffteile in den erfindungsgemäßen Erzeugnissen enthalten sein. Beispielsweise können Verscheibungen Dichtungsmaterialen am Rand der Verscheibungen aufweisen. Bedachungen können beispielsweise Metallkomponenten wie Schrauben, Metallstifte oder ähnliches aufweisen, die zur Befestigung oder Führung (bei Falt- oder Schiebedächern) der Bedachungselemente dienen können. Ferner können weitere Materialien mit den erfindungsgemäßen Zusammensetzungen verbunden werden, z.B. im 2-Komponenten-Spritzguss. So kann das entsprechende Bauteil mit IR-absorbierenden Eigenschaften mit einem Rand versehen werden, welcher z.B. dem Verkleben dient.

Da die erfindungsgemäßen Mehrschichtaufbauten eine hohe Thermostabilität sowohl bei den Verarbeitungstemperaturen der Kunststoffe als auch beim Dauereinsatz in Verscheibungen sowie eine hohe Stabilität gegen dauerhafte Lichteinstrahlung aufweisen, ist ihre Verwendung für den Dauereinsatz in Kunststoff-Verscheibungen in Gebäuden, Automobilen, Schienen- und Luftfahrzeugen besondern bevorzugt.

Weiterhin Gegenstand der vorliegenden Erfindung ist demnach die Verwendung der erfindungsgemäßen Mehrschichtaufbauten für Kunststoff-Verscheibungen in Gebäuden, Automobilen, Schienen- und Luftfahrzeugen.

Weiterhin Gegenstand der vorliegenden Erfindung sind zudem Kunststoff-Verscheibung in Gebäuden, Automobilen, Schienen- und Luftfahrzeugen enthaltend wenigstens einen erfindungsgemäßen Mehrschichtaufbau.

Die folgenden Beispiele dienen der exemplarischen Erläuterung der Erfindung und sind nicht als Beschränkung aufzufassen.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

### Bestimmung des Schmelzvolumenrate (MVR):

Die Bestimmung des Schmelzvolümenrate (MVR) erfolgte nach ISO 1133 (bei 300 °C; 1,2 kg).

### Bestimmung der Farbe:

Die Bestimmung der Farbe in Transmission erfolgt mit einem Lambda 900 Spektralphotometer der Firma Perkin Elmer mit Photometerkugel in Anlehnung an ASTM E1348 mit den in der ASTM E308 beschriebenen Gewichtungsfaktoren und Formeln.

Die Berechnung der CIELAB Farbkoordinaten L*, a*, b* erfolgt für Lichtart D 65 und 10° Normalbeobachter.

### Lichttransmission:

Die Lichttransmission wurde an einem Lambda 900 Spektralphotometer der Firma Perkin Elmer mit Photometerkugel nach ISO 13468-2 durchgeführt.

Bestimmung des T_{DS}-Wertes (Solar Direct Transmittance), des R_{DS}-Wertes (Solar Direct Reflectance) und des T_{TS}-Wertes (Solar Total Transmittance):
Die Transmissions- und Reflexionsmessungen wurden an einem Lambda 900 Spektralphotometer der Firma Perkin Elmer mit Photometerkugel durchgeführt: Alle Werte wurden bei Wellenlängen von 320 nm bis einschließlich 2300. nm mit Δλ 5nm bestimmt.

Die Berechnung der "Solar Direct Transmittance" T_{DS}, der "Solar Direct Reflectance" R_{DS} sowie der "Solar, Total Transmittance" T_{TS} wurde nach ISO 13837, computational convention "A" durchgeführt. Dabei wurde die Berechnung des T_{TS} - Wertes nach Anhang B der ISO 13837 durchgeführt. Dabei wurde eine vertikale Anordnung für ein stehendes Fahrzeug (nach Anhang B.2 der ISO 13837) und die unter "Note 2" im Anhang B.2 der ISO 13837 angegeben Koeffizienten für Einfachglas angenommen.

### Bestimmung der mittleren Partikelgröße der erfindungsgemäß eingesetzten IR-Absorber-Nanopartikel:

Die Bestimmung der Partikelgröße erfolgte mittels Transmissionselektronenmikroskopie an einem Mikroskop mit der Typenbezeichnung EM 208 der Firma FEI Company (5651 GG Eindhoven, Niederlande). Dazu wurde die IR-Absorber-Dispersion (z.B. Dispersion FMDS 874) mittels eines Achatmörsers aufgerieben und danach mittels Ultraschall in Ethanol auf einem Kupferträgernetz (für Transmissionselektronenspektroskopie) präpariert. Es wurde Aufnahmen in einer 310000-fachen Vergrößerung angefertigt. Die Partikelgröße wurde mittels bildanalytischer Meßmethoden im Hellfeldkontrast (Auswertung der Partikelgröße über Grauwertkontrast) bestimmt.

Die Bestimmung der mittleren Partikelgröße wurde am Produkt FMDS 874 durchgeführt und lieferte das folgende Ergebnis:
Anzahl der ausgewerteten Objekte: 217
Kleinster Messwert: 3,0 nm
Größter Messwert: 20,1 nm
Arithmetischer Mittelwert (mittlerer Partikeldurchmesser): 7,80

### Herstellung der Musterplättchen:

Zur Herstellung der Musterplättchen wurde additivfreies Polycarbonat Makrolon^{®} 2608 (lineares Bisphenol-A Polycarbonat) der Firma Bayer MaterialScience mit einem Schmelzvolumenrate (MVR) von 12 cm³/l0 min bei 300 °C und 1,2 kg Belastung gemäß ISO 1133 verwendet.

Die Compoundierung der Additive erfolgte auf einem Zweiwellenextruder der Firma KrausMaffei Berstorff TYP ZE25 bei einer Gehäusetemperatur von 260°C bzw. einer Massetemperatur von 270°C und einer Drehzahl von 100 Upm.

Das Granulat wurde bei 120 °C für 3 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 90 °C zu Musterplatten mit den Abmessungen 60 mm x 40 mm x 4 mm verarbeitet.

Als IR-Absorber auf Basis von ATO wurde eine pulverförmige Dispersion (FMDS 874 der Firma Sumitomo Metal Mining, Japan, Polyacrylat-Dispersion) eingesetzt, wobei der Feststoffgehalt an SnO₂:Sb in der Dispersion 25 Gew.% betrug.

Als IR-Absorber in den Vergleichsbeispielen wurde Lanthanhexaborid LaB₆ (KHDS 06 der Firma Sumitomo Metal Mining, Japan) eingesetzt. Das Produkt lag in Form einer pulverförmigen Dispersion in Polyacrylat vor. Der Feststoffgehalt an Lanthanhexaborid in der eingesetzten kommerziellen KHDS 06-Dispersion betrug 21,5 Gew.%.

Als Thermostabilisatoren wurde Triphenylphosphin (TPP, Sigma-Aldrich, 82018 Taufkirchen, Deutschland) eingesetzt.

Als UV-Absorber wurde TINUVIN^{®} 329 (nachfolgend TIN 329) (2-(Benzotriazol-2-yl)-4-(2,4,4-trimethylpentan-2-yl)phenol / CAS-Nr. 3147-75-9) der Firma BASF AG, Ludwigshafen, eingesetzt.

Als Entformen wurde Pentaerythrittetrastearat (Fa. Cognis Oleochemicals GmbH Düsseldorf) eingesetzt.

### Multilagenfolie:

Es wurde eine kommerziell erhältliche IR-Reflexionsfolie der Firma 3M (SRF 1200) verwendet. Dabei handelte es sich um eine transparente, IR reflektierende Folie mit weniger als 20% Lichttransmission im Bereich zwischen 850 und 1100 nm (bestimmt nach ASTM D 1003).

### Klebebeschichtung und Applikation auf die Multilagenfolie:

Zur Lamination der Multilagenfolie auf das thermoplastische Substrat (Musterplättchen) wurde eine Klebeschicht als Haftvermittler eingesetzt. Diese wurde aus einer Klebstoffdispersion hergestellt, die die nachfolgenden Komponenten enthielt:

### A) Polyurethandispersion: Dispercoll® U 53

Polyurethandispersion der Bayer MaterialScience AG, 51368 Leverkusen; Feststoffgehalt ca. 45 Gew.%.; Isocyanat-reaktives Polymer aus linearen Polyurethanketten.

### B) Verdicker: Borchi® Gel L 75 N

Nicht-ionischer, flüssiger, aliphatischer Polyurethan-basierter Verdicker: Viskosität bei 23°C: > 9.000 mPas; Nicht flüchtige Bestandteile: 50 Gew.-%.

### C) Oberflächendeaktiviertes Polyisocyanat: Dispercoll® BL XP 2514

Suspension von oberflächendeaktiviertem TDI-Uretdion (TDI-Dimer) in Wasser mit einem Feststoffgehalt von ca. 40 Gew.-%.

Für die Herstellung der Klebstoffdispersion wurden zunächst 700 Gewichtsteile der Polyurethandispersion A) unter Rühren mit 7 Gewichtsteilen des Verdickers B) versetzt, um die Viskosität zu erhöhen. Anschließend wurden unter Rühren zu 100 Gewichtsteilen dieser verdickten Dispersion 10 Gewichtsteile des oberflächendeaktivierten Polyisocyanats C) zugegeben, so dass eine wässrige Dispersion erhalten wurde.

Anschließend wurde die IR-Reflexionsfolie mit einem Spiral-Rakel mit dieser Klebstoffdispersion beschichtet, wobei die Nassschichtdicke der Klebstoffdispersion 100 µm betrug, so dass eine Trockenschichtdicke von ca. 30 µm erhalten wurde. Anschließend wurde die beschichtete Folie 90 min bei ca. 35°C im Trockenschrank getrocknet und war dann fertig zum Einsatz in der Lamination.

Die Lamination der Folie auf die Musterplättchen erfolgte mittels einer Laminationspresse der Firma Bürkle mit folgenden Parametern:
- Vorheizen der Presse auf 170-180°C
- Pressen für 8 Minuten bei einem Druck von 15 N/cm²
- Pressen für 2 Minuten bei einem Druck von 200 N/cm²
- Abkühlen der Presse auf 38°C und öffnen der Presse.

### Beispiel 1 (Vergleichsbeispiel):

Makrolon^{®} 2608 wurde mit 0,05 % Triphenylphosphin unter oben beschriebenen Bedingungen versetzt und compoundiert. Nach Herstellung der Musterplättchen wurde eine Multilagenfolie wie oben beschrieben auflaminiert.

### Beispiel 2 (Vergleichsbeispiel)

Makrolon^{®} 2608 wurde mit 0,025 Gew.-% ATO (Gewichtsanteil ATO bezogen auf das Gesamtgewicht der Kunststoffzusammensetzung; entspricht 0,1 Gew.% ATO enthaltende. FMDS 874 Dispersion) sowie 0,05 % Triphenylphosphin unter oben beschriebenen Bedingungen versetzt und compoundiert. Nach Herstellung der Musterplättchen wurde eine Multilagenfolie wie oben beschrieben auflaminiert.

### Beispiel 3 (Vergleichsbeispiel)

Makrolon^{®} 2608 wurde mit 0,0022% Lanthanhexaborid (Gewichtsanteil LaB₆ bezogen auf das Gesamtgewicht der Kunststoffzusammensetzung; entspricht 0,01 Gew.-% LaB₆ enthaltende KHDS 06 Dispersion) sowie 0,05 % Triphenylphosphin unter oben beschriebenen Bedingungen versetzt und compoundiert. Nach Herstellung der Musterplättchen wurde eine Multilagenfolie wie oben beschrieben auflaminiert.

### Beispiel 4 (Vergleichsbeispiel)

Makrolon^{®} 2608 wurde mit 0,0065% Lanthanhexaborid (Gewichtsanteil LaB₆ bezogen auf das Gesamtgewicht der Kunststoffzusammensetzung; entspricht 0,03 Gew.-% LaB₆ enthaltende KHDS 06 Dispersion) sowie 0,05 % Triphenylphosphin unter oben beschriebenen Bedingungen versetzt und compoundiert. Nach Herstellung der Musterplättchen wurde eine Multilagenfolie wie oben beschrieben auflaminiert.

### Beispiel 5 (Erfindungsgemäß)

Makrolon^{®} 2608 wurde mit 0,075% ATO (Gewichtsanteil ATO bezogen auf das Gesamtgewicht der Kunststoffzusammensetzung; entspricht 0,3 Gew.-% ATO enthaltende FMDS 874 Dispersion) sowie 0,05 % Triphenylphosphin unter oben beschriebenen Bedingungen versetzt und compoundiert. Nach Herstellung der Musterplättchen wurde eine Multilagenfolie wie oben beschrieben auflaminiert.

### Beispiel 6 (Erfindungsgemäß)

Makrolon^{®} 2608 wurde mit 0,10% ATO (Gewichtsanteil ATO bezogen auf das Gesamtgewicht der Kunststoffzusammensetzung; entspricht 0,4 Gew.-% ATO enthaltende FMDS 874 Dispersion) sowie 0,05 % Triphenylphosphin unter oben beschriebenen Bedingungen versetzt und compoundiert. Nach Herstellung der Musterplättchen wurde eine Multilagenfolie wie oben beschrieben auflaminiert.

Die Ergebnisse der Messungen der T_{TS}, Ty, Re und Farbwerte für die Beispiele 1 bis 6 sind in Tab. 1 zusammengefässt.

**Tab. 1**

| Beispiel-Nr. | LaB₆ [Gew.-%] | ATO [Gew.-%] | T_{TS} [%] | Ty [%] | Re [%] | a* | b* |
|---|---|---|---|---|---|---|---|
| 1 | - | - | 65.9 | 87.5 | 30.3 | -0,42 | 2,45 |
| 2 | - | 0,025 | 61.7 | 82.9 | 27.5 | -0,89 | 2,73 |
| 3 | 0,0022 | - | 50.5 | 71.0 | 28.3 | -3,89 | 10,08 |
| 4 | 0,0065 | - | 36.2 | 47.2 | 26.0 | -8,01 | 20,99 |
| 5 | - | 0,075 | 55.3 | 75.7 | 27.1 | -1,69 | 2,82 |
| 6 | - | 0,10 | 52.6 | 71.6 | 27.0 | -2,00 | 3,25 |

Die erfindungsgemäßen Beispiele 5 und 6 zeigen, dass durch den erfindungsgemäßen Schichtaufbau niedrige Gesamttransmissionswerte für IR-Strahlung (T_{TS} <56%) bei gleichzeitig hoher Transmission im sichtbaren Wellenlängenbereich (Ty) und geringer Eigenfarbe erreicht werden können. Damit weisen diese Systeme einen hohen Schutz gegen Wärmestrahlung auf, ohne jedoch die visuelle Transparenz zu beeinträchtigen. Demgegenüber weisen andere Systeme gemäß den Vergleichbeispielen entweder eine zu hohe Gesamttransmissionswerte für IR-Strahlung (vgl. Beispiele 1 und 2; zu hoher T_{TS}-Wert) auf oder sind stark gefärbt (vgl. Beispiele 3 und 4). So sind die Beispiele 3 und 6 von ihren T_{TS}- und visueller Lichttrasnmission (Ty) her vergleichbar, jedoch weist Beispiel 3 deutlich höhere Farbwerte auf. Beispiel 4 zeigt zwar einen niedrigen T_{TS}-Wert, jedoch ist weder die Farbe noch die Lichttransmission akzeptabel.

## Patentansprüche

1. Mehrschichtaufbau, **dadurch gekennzeichnet, dass** er
- wenigstens eine Basisschicht enthaltend wenigstens einen transparenten thermoplastischen Kunststoff sowie 0,038 Gew.-% bis 0,5 Gew.-% Nanopartikel auf Basis von Indium-Zinn-Oxid (ITO) und/oder Antimon-dotiertem Zinn-Oxid, bezogen auf das Gesamtgewicht der Kunststoffzusammensetzung für die Basisschicht, als IR-Absorber, wobei die Basisschicht nicht Lanthanhexaborid als möglichen weiteren IR Absorber enthält, und
- wenigstens eine IR-Strahlung reflektierende Multilagenschicht, welche in den unmittelbar aneinander grenzenden Schichten unterschiedliche Kunststoffe und unterschiedliche Brechungsindizes aufweist,
enthält.

2. Mehrschichtaufbau gemäß Anspruch 1, **dadurch gekennzeichnet, dass** es sich bei der Multilagenschicht um eine Schicht hergestellt aus einer optischen Interferenzfolie handelt.

3. Mehrschichtaufbau gemäß Anspruch 1 oder 2, **dadurch gekennzeichnet, dass** es sich bei der Multilagenschicht um eine solche handelt, bei der die Brechungsindizes der jeweils unmittelbar aneinander grenzenden Schichten sich um mindestens 0,03, bevorzugt um mindestens 0,06 voneinander unterscheiden.

4. Mehrschichtaufbau gemäß wenigstens einem der Ansprüche 1 bis 3, **dadurch gekennzeichnet, dass** die Multilagenschicht wenigstens 10 Schichten mit unterschiedlichen Brechungsindizes aufweist.

5. Mehrschichtaufbau gemäß wenigstens einem der Ansprüche 1 bis 4, **dadurch gekennzeichnet, dass** die einzelnen Schichten der Multilagenschicht eine Schichtdicke von 30 bis 500 nm, bevorzugt von 50 bis 400 nm aufweisen.

6. Mehrschichtaufbau gemäß wenigstens einem der Ansprüche 1 bis 5, **dadurch gekennzeichnet, dass** die Nanopartikel auf Basis von Indium-Zinn-Oxid (ITO) und/oder Antimon-dotiertem Zinn-Oxid in der Basisschicht in einer Menge von 0,038 bis 0,500 Gew.-%, bevorzugt von 0,050 bis 0,250 Gew.%, besonders bevorzugt von 0,063 bis 0,150 Gew.-%, bezogen auf das Gesamtgewicht der Kunststoffzusammensetzung für die Basisschicht, enthalten sind.

7. Mehrschichtaufbau gemäß wenigstens einem der Ansprüche 1 bis 6, **dadurch gekennzeichnet, dass** die Nanopartikel auf Basis von Indium-Zinn-Oxid (ITO) und/oder Antimon-dotiertem Zinn-Oxid einen mittleren Partikeldurchmesser von kleiner als 200 nm, besonders bevorzugt kleiner als 100 nm und ganz besonders bevorzugt kleiner als 50 nm aufweisen.

8. Mehrschichtaufbau gemäß wenigstens einem der Ansprüche 1 bis 7, **dadurch gekennzeichnet, dass** es sich bei dem transparenten thermoplastischen Kunststoff in der Basisschicht um einen oder mehrere Kunststoff(e) ausgewählt aus der Gruppe Polycarbonate oder Copolycarbonate auf Basis von Diphenolen, Poly- oder Copolyestercarbonate, Poly- oder Copolyacrylate und Poly- oder Copolymethacrylat, Copolymere mit Styrol, Polymere auf der Basis von Ethylen und/oder Propylen, aromatische Polyester, Polymere auf Basis von zyklischen Olefinen und transparente thermoplastische Polyurethane, bevorzugt um einen oder mehrere Kunststoff(e) ausgewählt aus der Gruppe Polycarbonate oder Copolycarbonate auf Basis von Diphenolen, Poly- oder Copolymethacrylat und aromatische Polyester handelt.

9. Mehrschichtaufbau gemäß wenigstens einem der Ansprüche 1 bis 8, **dadurch gekennzeichnet, dass** er auf der Seite der Basisschicht und/oder auf der Seite der Multilagenschicht wenigstens eine kratzfeste Beschichtung aufweist.

10. Mehrschichtaufbau gemäß wenigstens einem der Ansprüche 1 bis 9, **dadurch gekennzeichnet, dass** die Basisschicht und/oder die gegebenenfalls vorhandene(n) kratzfeste(n) Beschichtung(en) wenigstens einen UV-Absorber enthalten.

11. Mehrschichtaufbau gemäß wenigstens einem der Ansprüche 1 bis 10, **dadurch gekennzeichnet, dass** die Schichtdicke der Basisschicht mindestens 500 µm beträgt.

12. Mehrschichtaufbau gemäß wenigstens einem der Ansprüche 1 bis 11, **dadurch gekennzeichnet, dass** die Basisschicht einen IR-Transmissonsgrad von weniger als 20 % im Wellenlängenbereich von 1200 bis 2300 nm, bevorzugt im Wellenlängenbereich von 1400 bis 2300 nm aufweist und die Multilagenschicht 30 % der IR-Strahlung im Wellenlängenbereich von 850 bis 1800 nm, bevorzugt von 850 bis 1500 nm reflektiert.

13. Verfahren zur Herstellung eines Mehrschichtaufbaus gemäß wenigstens einem der Ansprüche 1 bis 12, **dadurch gekennzeichnet, dass**
A) eine Kunststoffzusammensetzung enthaltend wenigstens einen transparenten thermoplastischen Kunststoff, Nanopartikel auf Basis von Indium-Zinn-Oxid (ITO) und/oder Antimon-dotiertem Zinn-Oxid sowie gegebenenfalls wenigstens einen UV-Absorber und/oder wenigstens einen Stabilisator hergestellt wird,
B) aus der unter A) erhaltenen Kunststoffzusammensetzung mittels Extrusion oder Spritzguss ein Kunststoffsubstrat hergestellt wird,
C) auf das unter B) erhaltene Kunststoffsubstrat unter Verwendung eines Klebstoffes und/oder mittels Lamination eine Multilagenfolie aufgebracht wird,
D) gegebenenfalls auf eine oder beide Außenseiten des unter C) erhaltenen Produktes wenigstens eine kratzfeste Beschichtung aufgebracht wird.

14. Verwendung eines Mehrschichtaufbaus gemäß wenigstens einem der Ansprüche 1 bis 12 für Kunststoff Verscheibungen in Gebäuden, Automobilen, Schienen- und Luftfahrzeugen.

15. Kunststoff-Verscheibung in Gebäuden, Automobilen, Schienen- und Luftfahrzeugen enthaltend wenigstens einen Mehrschichtaufbau gemäß wenigstens einem der Ansprüche 1 bis 12.

## Claims

1. Multilayer structure, **characterized in that** it comprises
- at least one base layer comprising at least one transparent thermoplastic and 0.038 wt.% to 0.5 wt.% of nanoparticles based on indium tin oxide (ITO) and/or antimony-doped tin oxide, based on the total weight of the plastics composition for the base layer, as an IR absorber, wherein the base layer does not comprise lanthanum hexaboride as a possible further IR absorber, and
- at least one multi-ply layer which reflects IR radiation and has different plastics and different refractive indices in the layers directly adjacent to one another.

2. Multilayer structure according to claim 1, **characterized in that** the multi-ply layer is a layer produced from an optical interference film.

3. Multilayer structure according to claim 1 or 2, **characterized in that** the multi-ply layer is one in which the refractive indices of the particular layers directly adjacent to one another differ from one another by at least 0.03, preferably by at least 0.06.

4. Multilayer structure according to at least one of claims 1 to 3, **characterized in that** the multi-ply layer has at least 10 layers having different refractive indices.

5. Multilayer structure according to at least one of claims 1 to 4, **characterized in that** the individual layers of the multi-ply layer have a layer thickness of from 30 to 500 nm, preferably from 50 to 400 nm.

6. Multilayer structure according to at least one of claims 1 to 5, **characterized in that** it comprises the nanoparticles based on indium tin oxide (ITO) and/or antimony-doped tin oxide in the base layer in an amount of from 0.038 to 0.500 wt.%, preferably from 0.050 to 0.250 wt.%, particularly preferably from 0.063 to 0.150 wt.%, based on the total weight of the plastics composition for the base layer.

7. Multilayer structure according to at least one of claims 1 to 6, **characterized in that** the nanoparticles based on indium tin oxide (ITO) and/or antimony-doped tin oxide have an average particle diameter of less than 200 nm, particularly preferably less than 100 nm and very particularly preferably less than 50 nm.

8. Multilayer structure according to at least one of claims 1 to 7, **characterized in that** the transparent thermoplastic in the base layer is one or more plastic(s) chosen from the group of polycarbonates or copolycarbonates based on diphenols, poly- or copolyester carbonates, poly- or copolyacrylates and poly- or copolymethacrylate, copolymers with styrene, polymers based on ethylene and/or propylene, aromatic polyesters, polymers based on cyclic olefins and transparent thermoplastic polyurethanes, preferably one or more plastic(s) chosen from the group of polycarbonates or copolycarbonates based on diphenols, poly- or copolymethacrylate and aromatic polyesters.

9. Multilayer structure according to at least one of claims 1 to 8, **characterized in that** it has at least one scratch-resistant coating on the side of the base layer and/or on the side of the multi-ply layer.

10. Multilayer structure according to at least one of claims 1 to 9, **characterized in that** the base layer and/or the scratch-resistant coating(s) optionally present comprise at least one UV absorber.

11. Multilayer structure according to at least one of claims 1 to 10, **characterized in that** the layer thickness of the base layer is at least 500 µm.

12. Multilayer structure according to at least one of claims 1 to 11, **characterized in that** the base layer has an IR transmittance of less than 20 % in the wavelength range of from 1200 to 2300 nm, preferably in the wavelength range of from 1400 to 2300 nm, and the multi-ply layer reflects 30 % of the IR radiation in the wavelength range of from 850 to 1800 nm, preferably from 850 to 1500 nm.

13. Process for the production of a multilayer structure according to at least one of claims 1 to 12, **characterized in that**
A) a plastics composition comprising at least one transparent thermoplastic, nanoparticles based on indium tin oxide (ITO) and/or antimony-doped tin oxide and optionally at least one UV absorber and/or at least one stabilizer is prepared,
B) a substrate of plastic is produced by means of extrusion or injection moulding from the plastics composition obtained under A),
C) a multi-ply film is applied using an adhesive and/or by means of lamination to the substrate of plastic obtained under B),
D) at least one scratch-resistant coating is optionally applied to one or both outer sides of the product obtained under C).

14. Use of a multilayer structure according to at least one of claims 1 to 12 for glazing made of plastic in buildings, automobiles, rail vehicles and aircraft.

15. Glazing made of plastic in buildings, automobiles, rail vehicles and aircraft, comprising at least one multilayer structure according to at least one of claims 1 to 12.

## Revendications

1. Structure multicouche, **caractérisée en ce qu'**elle continent :
- au moins une couche de base contenant au moins un plastique thermoplastique transparent, ainsi que 0,038 % en poids à 0,5 % en poids de nanoparticules à base d'oxyde d'indium-étain (ITO) et/ou d'oxyde d'étain dopé avec de l'antimoine, par rapport au poids total de la composition de plastique pour la couche de base, en tant qu'absorbant IR, la couche de base ne contenant pas d'hexaborure de lanthane en tant qu'absorbant IR supplémentaire possible, et
- au moins une couche multicouche réfléchissant le rayonnement IR, qui présente dans les couches directement adjacentes des plastiques différents et des indices de réfraction différents.

2. Structure multicouche selon la revendication 1, **caractérisée en ce que** la couche multicouche est une couche fabriquée à partir d'une feuille d'interférence optique.

3. Structure multicouche selon la revendication 1 ou 2, **caractérisée en ce que** la couche multicouche est une couche dans laquelle les indices de réfraction des couches directement adjacentes respectives diffèrent les uns des autres d' au moins 0,03, de préférence d'au moins 0,06.

4. Structure multicouche selon au moins l'une quelconque des revendications 1 à 3, **caractérisée en ce que** la couche multicouche comprend au moins 10 couches d'indices de réfraction différents.

5. Structure multicouche selon au moins l'une quelconque des revendications 1 à 4, **caractérisée en ce que** les couches individuelles de la couche multicouche présentent une épaisseur de couche de 30 à 500 nm, de préférence de 50 à 400 nm.

6. Structure multicouche selon au moins l'une quelconque des revendications 1 à 5, **caractérisée en ce que** les nanoparticules à base d'oxyde d'indium-étain (ITO) et/ou d'oxyde d'étain dopé avec de l'antimoine sont contenues dans la couche de base en une quantité de 0,038 à 0,500 % en poids, de préférence de 0,050 à 0,250 % en poids, de manière particulièrement préférée de 0,063 à 0,150 % en poids, par rapport au poids total de la composition de plastique pour la couche de base.

7. Structure multicouche selon au moins l'une quelconque des revendications 1 à 6, **caractérisée en ce que** les nanoparticules à base d'oxyde d'indium-étain (ITO) et/ou d'oxyde d'étain dopé avec de l'antimoine présentent un diamètre de particule moyen inférieur à 200 nm, de manière particulièrement préférée inférieur à 100 nm et de manière tout particulièrement préférée inférieur à 50 nm.

8. Structure multicouche selon au moins l'une quelconque des revendications 1 à 7, **caractérisée en ce que** le plastique thermoplastique transparent dans la couche de base consiste en un ou plusieurs plastiques choisis dans le groupe constitué par les polycarbonates ou les copolycarbonates à base de diphénols, les poly-ou copolyester-carbonates, les poly- ou copolyacrylates et les poly- ou copolyméthacrylates, les copolymères contenant du styrène, les polymères à base d'éthylène et/ou de propylène, les polyesters aromatiques, les polymères à base d'oléfines cycliques et les polyuréthanes thermoplastiques transparents, de préférence un ou plusieurs plastiques choisis dans le groupe constitué par les polycarbonates ou les copolycarbonates à base de diphénols, les poly- ou copolyméthacrylates et les polyesters aromatiques.

9. Structure multicouche selon au moins l'une quelconque des revendications 1 à 8, **caractérisée en ce qu'**elle comprend au moins un revêtement résistant aux éraflures sur le côté de la couche de base et/ou sur le côté de la couche multicouche.

10. Structure multicouche selon au moins l'une quelconque des revendications 1 à 9, **caractérisée en ce que** la couche de base et/ou le ou les revêtements résistants aux éraflures éventuellement présents contiennent au moins un absorbant UV.

11. Structure multicouche selon au moins l'une quelconque des revendications 1 à 10, **caractérisée en ce que** l'épaisseur de couche de la couche de base est d'au moins 500 µm.

12. Structure multicouche selon au moins l'une quelconque des revendications 1 à 11, **caractérisée en ce que** la couche de base présente un degré de transmission de l'IR inférieur à 20 % dans la plage de longueurs d'onde allant de 1 200 à 2 300 nm, de préférence dans la plage de longueurs d'onde allant de 1 400 à 2 300 nm, et la couche multicouche réfléchit 30 % du rayonnement IR dans la plage de longueurs d'onde allant de 850 à 1 800 nm, de préférence de 850 à 1 500 nm.

13. Procédé de fabrication d'une structure multicouche selon au moins l'une quelconque des revendications 1 à 12, **caractérisé en ce que**
A) une composition de plastique contenant au moins un plastique thermoplastique transparent, des nanoparticules à base d'oxyde d'indium-étain (ITO) et/ou d'oxyde d'étain dopé avec de l'antimoine, ainsi qu'éventuellement au moins un absorbant UV et/ou au moins un stabilisateur, est fabriquée,
B) un substrat en plastique est fabriqué à partir de la composition de plastique obtenue en A) par extrusion ou moulage par injection,
C) une feuille multicouche est appliquée sur le substrat en plastique obtenu en B) en utilisant un adhésif et/ou par stratification,
D) au moins un revêtement résistant aux éraflures est éventuellement appliqué sur un des côtés ou sur les deux côtés du produit obtenu en C).

14. Utilisation d'une structure multicouche selon au moins l'une quelconque des revendications 1 à 12, pour des vitrages en plastique dans des bâtiments, des automobiles, des véhicules ferroviaires et des aéronefs.

15. Vitrage en plastique dans des bâtiments, des automobiles, des véhicules ferroviaires et des aéronefs, contenant au moins une structure multicouche selon au moins l'une quelconque des revendications 1 à 12.
